# EUROPÄISCHE PATENTSCHRIFT

(11) **EP 4 377 589 B1**
(45) Veröffentlichungstag und Bekanntmachung des Hinweises auf die Patenterteilung: **22.10.2025**
(21) Anmeldenummer: 22737555.7
(22) Anmeldetag: 27.06.2022
(51) Int. Cl.: F16D 1/08, F16H 57/033, F16D 3/68, F16H 57/028, F16H 57/023, F16H 57/02, F16D 41/06

(54) **ADAPTERBAUREIHE FÜR GETRIEBEMOTOREN UND VERFAHREN ZUM HERSTELLEN EINES ADAPTERS**
ADAPTER SERIES FOR GEARED MOTORS, AND METHOD FOR PRODUCING AN ADAPTER
SÉRIE D'ADAPTATEURS POUR MOTEURS À ENGRENAGES ET PROCÉDÉ DE FABRICATION D'UN ADAPTATEUR

(30) Priorität: 28.07.2021 US 202163226385 P; 06.09.2021 DE 102021004494
(43) Veröffentlichungstag der Anmeldung: 05.06.2024
(73) Patentinhaber: SEW-EURODRIVE GmbH & Co. KG, 76646 Bruchsal (DE)
(72) Erfinder: MERKEL, Philipp, 76307 Karlsbad (DE); BASIEWICZ, Michael, 75053 Gondelsheim (DE); PARRIS, Billy, Moore, SC 29369 (US); KASPER, Jürgen, 67360 Lingenfeld (DE)
(86) Internationale Anmeldenummer: PCT/EP2022/025291
(87) Internationale Veröffentlichungsnummer: WO 2023/006239

(56) Entgegenhaltungen:
- EP-B1- 3 740 690
- WO-A1-2019/141342
- US-A1- 2003 176 222
- US-A1- 2006 096 412
- US-B1- 6 328 655

## Beschreibung

Die Erfindung betrifft eine Adapterbaureihe für Getriebemotoren und ein Verfahren zum Herstellen eines Adapters.

Es ist allgemein bekannt, dass ein Getriebemotor einen Elektromotor aufweist, der ein Getriebe antreibt.

Im Stand der Technik ist ein Freilauf, insbesondere ein Klemmkörperfreilauf, bekannt, der einen Innenring und einen Außenring sowie weitere Komponenten, wie Klemmkörper aufweist.

Aus der DE 101 23 548 A1 ist ein Umlaufgetriebe bekannt.

Aus der WO 02/021 895 A2 ist eine Baureihe von Adaptervorrichtungen bekannt.

**Aus der** US 6 328 655 B1 **ist als nächstliegender Stand der Technik ein Adaptersystem bekannt.**

**Aus der** US 2003/176222 A1 **ist eine Adapterbaureihe bekannt.**

**Aus der** US 2006/096412 A1 **ist ein einstufiges oder mehrstufiges epizyklisches Getriebe bekannt.**

**Aus der** WO 2019/141342 A1 **ist eine Antriebsvorrichtung bekannt.**

Der Erfindung liegt daher die Aufgabe zugrunde, für verschiedene Applikationsfälle eines Getriebemotors mit geringem Aufwand eine optimale Lösung herzustellen.

Erfindungsgemäß wird die Aufgabe bei der Adapterbaureihe nach den in Anspruch 1 angegebenen Merkmalen und bei dem Verfahren nach den in Anspruch 16 angegebenen Merkmalen gelöst.

Wichtige Merkmale bei der Adapterbaureihe für Getriebemotoren, die einen ersten Adapter und einen zweiten Adapter aufweist, sind, dass
(i) der erste Adapter eine Adapterwelle, ein erstes Lager und ein Gehäuse aufweist, das ein erstes und ein zweites Gehäuseteil aufweist,
   wobei das erste Gehäuseteil mit dem zweiten Gehäuseteil verbunden ist, insbesondere direkt verbunden ist, insbesondere zur Bildung des Gehäuses,
   wobei der Innenring des ersten Lagers auf die Adapterwelle aufgesteckt ist,
   wobei der Außenring des ersten Lagers im ersten und im zweiten Gehäuseteil aufgenommen ist und das erste Gehäuseteil zum zweiten Gehäuseteil zentriert,
(ii)wobei der zweite Adapter eine zweite Adapterwelle, ein zum ersten Lager identisch ausgeführtes erstes Lager und ein zweites Gehäuse aufweist, das ein zum ersten Gehäuseteil identisch ausgeführtes erstes Gehäuseteil, ein zum zweiten Gehäuseteil identisch ausgeführtes zweites Gehäuseteil und einen Zwischenflansch aufweist,
   wobei das erste Gehäuseteil des zweiten Adapters mit dem Zwischenflansch verbunden ist, insbesondere direkt verbunden ist, und der Zwischenflansch auf seiner insbesondere in axialer Richtung, also in Richtung der Drehachse der zweiten Adapterwelle, vom ersten Gehäuseteil abgewandten Seite mit dem zweiten Gehäuseteil verbunden ist, insbesondere direkt verbunden ist, insbesondere zur Bildung des Gehäuses,
   wobei der Innenring des ersten Lagers des zweiten Adapters auf die Adapterwelle aufgesteckt ist,
   wobei der Außenring des ersten Lagers des zweiten Adapters im ersten Gehäuseteil und im Zwischenflansch aufgenommen ist und das erste Gehäuseteil zum Zwischenflansch zentriert,
   wobei im Zwischenflansch ein Wellendichtring aufgenommen ist oder ein Freilauf aufgenommen ist oder im Zwischenflansch integriert ist.

Von Vorteil ist dabei, dass durch das wahlweise Einbringen des Zwischenflansches eine Zusatzfunktion, wie verbesserte Abdichtung durch einen Wellendichtring oder Freilauf, ohne besonderen Zusatzaufwand einbringbar ist. Somit ist für unterschiedliche Applikationsfälle eines Getriebemotors stets die optimale Lösung herstellbar. Insbesondere ist der erste Adapter sehr kompakt und der zweite Adapter mit der Zusatzfunktion ausgeführt.

Bei einer vorteilhaften Ausgestaltung weist das zweite Gehäuseteil Durchgangsbohrungen, insbesondere also durchgehende Bohrungen, insbesondere radial durchgehende Bohrungen, auf,
wobei die Durchgangsbohrungen in Umfangsrichtung voneinander, insbesondere gleichmäßig, beabstandet sind,
insbesondere wobei die Durchgangsbohrungen alle an derselben axialen Position angeordnet sind,
insbesondere wobei die jeweilige Durchgangsbohrung mit einem jeweiligen Verschlussstopfen verschlossen ist,
insbesondere wobei die Bohrungsachse jeder Durchgangsbohrung bei einer jeweiligen Winkelstellung der Adapterwelle in Flucht bringbar sind zu der Schraubenachse einer Klemmschraube eines mit der Adapterwelle drehfest verbindbaren Klemmrings des ersten oder zweiten Adapters. Von Vorteil ist dabei, dass bei einer motorseitigen Klemmverbindung die Betätigung einfach ausführbar ist, indem durch die Durchgangsbohrungen ein Werkzeug einführbar ist. Aber auch ohne die Klemmverbindung, wenn also beispielsweise eine Passfederverbindung, insbesondere Stufenpassfederverbindung eingesetzt wird, ist das zweite Gehäuseteil verwendbar, also kein anderes Gehäusetell notwendig.

Bei einer vorteilhaften Ausgestaltung ist beim ersten Adapter der Außenring des ersten Lagers einerseits in einer Bohrung des ersten Gehäuseteils und andererseits in einer Bohrung des zweiten Gehäuseteils aufgenommen,
wobei die Summe der Bohrtiefen der beiden Bohrungen der axialen Länge des Außenrings gleicht,
wobei beim zweiten Adapter der Außenring des ersten Lagers einerseits in einer Bohrung des ersten Gehäuseteils und andererseits in einer Bohrung des Zwischenflansches aufgenommen ist
wobei beim zweiten Adapter die Summe der Bohrtiefen der beiden Bohrungen der axialen Länge des Außenrings gleicht oder der Summe der axialen Längen des Außenrings des ersten Lagers und des Außenrings des Freilaufs gleicht.

Bei einer vorteilhaften Ausgestaltung weist der erste Adapter ein Kupplungsteil auf,
wobei die Adapterwelle Klauen, insbesondere in axialer Richtung hervorragende Klauen, aufweist,
wobei der Innenring des ersten Lagers auf einen an der Adapterwelle vorgesehenen, insbesondere fein bearbeiteten, Lagersitz aufgesteckt ist,
wobei der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung insbesondere mehrfach unterbrochen ausgebildet ist.

Bei einer vorteilhaften Ausgestaltung bei dem Adapter ist der Adapter insbesondere für einen Getriebemotor, mit einer Adapterwelle und einem Kupplungsteil sowie einem Lager, insbesondere Wälzlager, vorgesehen,
wobei das Adapterteil Klauen, insbesondere in axialer Richtung hervorragende Klauen, aufweist,
wobei der Innenring des Lagers auf einen an der Adapterwelle vorgesehenen, insbesondere fein bearbeiteten, Lagersitz aufgesteckt ist,
wobei der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung insbesondere mehrfach unterbrochen ausgebildet ist.

Von Vorteil ist dabei, dass der Adapter sehr kompakt aufgebaut ist. Dabei ist allerdings ein unterbrochener Lagersitz vorgesehen. Da der unterbrochene Lagersitz jedoch im Klauenbereich angeordnet ist und die Klauen schon deshalb sehr steif ausgeführt sind, weil ein hohes Drehmoment durchgeleitet werden muss, ist das Lager ausreichend stabil aufgenommen.

Bei einer vorteilhaften Ausgestaltung ist zwischen den Klauen des Kupplungsteils und den Klauen der Adapterwelle ein Dämpfungsteil angeordnet,
insbesondere wobei das Dämpfungsteil einen Grundkörper und daran anageformte in radialer Richtung hervorragende Strahlenbereiche aufweist,
wobei die Strahlenbereiche axial zwischen je einer Klaue des Kupplungsteils und einer des Adapterteils angeordnet ist. Von Vorteil ist dabei, dass die Drehmomentübertragung spielfrei ermöglicht ist und Drehmomentschwankungen abdämpfbar sind.

Bei einer vorteilhaften Ausgestaltung ist in axialer Richtung zwischen dem ersten Bereich und dem zweiten Bereich eine in Umfangsrichtung umlaufende Ausnehmung, insbesondere eine Ausdrehung, an der Adapterwelle ausgebildet. Von Vorteil ist dabei, dass der Lagersitz zwar auch an dieser Stelle unterbrochen ausgeführt ist, jedoch sind Aufwölbungen der Adapterwelle in dem Bereich der Ausnehmung beabstandet von dem Innenring des Lagers. Dabei werden die Aufwölbungen dann bewirkt, wenn die Klauen elastisch ausgelenkt werden, insbesondere bei durchzuleitenden Drehmomentstößen.

Bei einer vorteilhaften Ausgestaltung umfasst der von den Klauen in axialer Richtung überdeckte Bereich den zweiten Bereich und ist von dem ersten Bereich in axialer Richtung beabstandet. Von Vorteil ist dabei, dass der Lagersitz beide Bereiche aufweist und die Klauen beabstandet sind von dem ununterbrochenen Bereich. Somit ist dieser stabile Bereich entkoppelt von den elastisch auslenkbaren Klauen.

Insbesondere ist die axiale Richtung zur Drehachse der Adapterwelle parallel ausgerichtet, insbesondere wobei die Umfangsrichtung und/oder der Radialabstand auf diese Drehachse bezogen ist oder sind.

Bei einer vorteilhaften Ausgestaltung ist der Innenring axial beidseitig durch Sicherungsringe begrenzt. Von Vorteil ist dabei, dass das erste Lager als Festlager ausgeführt ist.

Bei einer vorteilhaften Ausgestaltung ist ein erster Sicherungsring in einer ersten Ringnut, insbesondere in einer vollständig und/oder ununterbrochen in Umfangsrichtung umlaufenden ersten Ringnut, der Adapterwelle aufgenommen und begrenzt den Innenring,
wobei die erste Ringnut von dem ersten Bereich und/oder von den Klauen in axialer Richtung beabstandet ist. Von Vorteil ist dabei, dass der erste Sicherungsring zwar in einer stabilen ununterbrochenen Ringnut aufgenommen ist. Der zweite Sicherungsring ist allerdings in einer unterbrochenen, also in einer durch in die Klauen eingebrachten Ringnut aufgenommen.

Bei einer vorteilhaften Ausgestaltung weist ein zweiter Sicherungsring den Innenring, insbesondere auf der in axialer Richtung vom ersten Sicherungsring abgewandten Seite des Innenrings, begrenzt,
wobei der zweite Sicherungsring in einer zweiten Ringnut aufgenommen ist. Von Vorteil ist dabei, dass der Innenring des Lagers begrenzt ist, auch wenn die Begrenzung im in Umfangsrichtung mehrfach unterbrochen ausgeführten Sitzbereich angeordnet ist. Somit ist eine besonders kompakte Lösung erreicht.

Bei einer vorteilhaften Ausgestaltung ist die zweite Ringnut in Umfangsrichtung insbesondere mehrfach unterbrochen ausgeführt und/oder die zweite Ringnut ist im zweiten Bereich angeordnet. Von Vorteil ist dabei, dass der Adapter sehr kompakt ausgeführt ist, da der Innenring des Lagers in den Bereich der Klauen axial teilweise hervorragt.

Bei einer vorteilhaften Ausgestaltung ist die zweite Ringnut in den Klauen des Adapterteils eingebracht und/oder in den Klauen des Kupplungsteils. Von Vorteil ist dabei, dass der Sicherungsring in axialer Richtung sicher aufgenommen ist.

Bei einer anderen vorteilhaften Ausgestaltung ist die zweite Ringnut in Umfangsrichtung ununterbrochen ausgeführt und ist im Kupplungsteil eingebracht. Von Vorteil ist dabei, dass die axiale Sicherung nicht direkt in der Adapterwelle, sondern in einem anderen Teil, nämlich im Kupplungsteil, ermöglicht ist. Somit überragt der Innenring sogar teilweise den Klauenbereich des Kupplungsteils. Somit ist der Adapter sehr kompakt aufbaubar.

Bei einer vorteilhaften Ausgestaltung weist der Adapter ein Gehäuse aufweist, das ein erstes und ein zweites Gehäuseteil auf,
wobei das erste Gehäuseteil mit dem zweiten Gehäuseteil verbunden ist,
wobei der Außenring des Lagers das im ersten und im zweiten Gehäuseteil aufgenommen ist und das erste zum zweiten Gehäuseteil zentriert. Von Vorteil ist dabei, dass der Außenring die beiden Gehäuseteile zueinander zentriert. Somit übernimmt das Lager zusätzlich eine Zentrierfunktion.

Bei einer vorteilhaften Ausgestaltung ist das Lager als Festlager ausgebildet. Von Vorteil ist dabei, dass das Lager axial fixiert ist.

Bei einer vorteilhaften Ausgestaltung weist der Adapter ein zweites Lager, insbesondere ein als Loslager ausgebildetes Lager, auf,
dessen Außenring im ersten Gehäuseteil aufgenommen ist und dessen Innenring auf die Adapterwelle aufgesteckt ist,
insbesondere wobei im ersten Gehäuseteil, insbesondere auf der vom Kupplungsteil abgewandten Seite des zweiten Lagers ein Wellendichtring aufgenommen ist, der zur Adapterwelle hin abdichtet, insbesondere dessen Dichtlippe auf der Adapterwelle läuft. Von Vorteil ist dabei, dass bei thermisch bedingten Längenveränderungen der Abstand zwischen Festlager und Loslager veränderlich ist, weil das Loslager in axialer Richtung verschiebbar ist, insbesondere etwas verschiebbar ist.

Wichtige Merkmale bei dem Getriebemotor mit einem Adapter sind, dass der Getriebemotor einen Elektromotor und ein Getriebe aufweist,
wobei eine Rotorwelle drehfest verbunden ist mit dem Kupplungsteil, insbesondere mittels Passfederverbindung,
wobei die Adapterwelle drehfest verbunden ist oder einstückig, insbesondere einteilig, ausgebildet ist, mit einem eintreibenden Verzahnungsteil des Getriebes.

Von Vorteil ist dabei, dass der Getriebemotor möglichst kompakt ausführbar ist.

Wichtige Merkmale bei dem Getriebemotor sind, dass Getriebemotor mit einem Adapter,
wobei der Adapter eine Adapterwelle, ein erstes Lager und ein erstes Gehäuseteil aufweist, wobei ein Elektromotor des Getriebemotors ein zweites Gehäuseteil aufweist,
wobei das erste Gehäuseteil mit dem zweiten Gehäuseteil verbunden ist, insbesondere direkt verbunden ist,
wobei der Innenring des ersten Lagers auf die Adapterwelle aufgesteckt ist,
wobei der Außenring des ersten Lagers im ersten und im zweiten Gehäuseteil aufgenommen ist und das erste Gehäuseteil zum zweiten Gehäuseteil zentriert,
wobei der Adapter ein Kupplungsteil aufweist,
wobei die Adapterwelle Klauen, insbesondere in axialer Richtung hervorragende Klauen, aufweist,
wobei der Innenring des ersten Lagers auf einen an der Adapterwelle vorgesehenen, insbesondere fein bearbeiteten, Lagersitz aufgesteckt ist,
wobei der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung insbesondere mehrfach unterbrochen ausgebildet ist,
wobei der Getriebemotor einen Elektromotor und ein Getriebe aufweist,
wobei eine Rotorwelle drehfest verbunden ist mit dem Kupplungsteil, insbesondere mittels Passfederverbindung,
wobei die Adapterwelle drehfest verbunden ist oder einstückig, insbesondere einteilig, ausgebildet ist, mit einem eintreibenden Verzahnungsteil des Getriebes,
insbesondere wobei eine Stufenpassfeder die Rotorwelle in Umfangsrichtung formschlüssig und/oder drehfest mit dem Kupplungsteil verbindet,
insbesondere wobei die Stufenpassfeder einen nach radial außen hervorragenden Außenkragen aufweist, welcher das Kupplungsteil in axial Richtung begrenzt, und wobei die Stufenpassfeder einen nach radial innen hervorragenden Innenkragen aufweist, welcher gegen die Stirnseite der Rotorwelle angestellt ist und/oder welcher die Rotorwelle entgegen der axialen Richtung begrenzt,
insbesondere wobei der von der Stufenpassfeder in axialer Richtung überdeckte Bereich mit dem von dem Kupplungsteil in axialer Richtung überdeckten Bereich überlappt und mit dem von der Rotorwelle in axialer Richtung überdeckten Bereich überlappt und/oder mit dem von der Adapterwelle in axialer Richtung überdeckten Bereich überlappt,
insbesondere wobei die Rotorwelle eine Passfedernut zur Aufnahme der Stufenpassfeder aufweist und die Passfedernut derart gestuft ausgeführt ist, dass der Innenkragen in der Passfedernut aufgenommen ist, insbesondere so dass der Innenkragen stirnseitig mit der Rotorwelle bündig abschließt.

Von Vorteil ist dabei, dass mittels der Stufenpassfeder nicht nur Drehmomentübertragung, sondern weitere Funktionen, wie axiale Begrenzung und/oder Sicherung, ausführbar sind. Somit sind mehrere Funktionen in der Stufenpassfeder integriert.

Wichtige Merkmale bei dem Getriebemotor sind, dass der Getriebemotor einen Elektromotor und ein Getriebe aufweist,
wobei eine Rotorwelle des Elektromotors drehfest verbunden ist mit einem Nabenteil,
insbesondere Kupplungsteil, insbesondere mittels Passfederverbindung,
wobei eine Stufenpassfeder die Rotorwelle in Umfangsrichtung formschlüssig und/oder drehfest mit dem Nabenteil verbindet,
wobei die Stufenpassfeder einen nach radial außen hervorragenden Außenkragen aufweist, welcher das Nabenteil in axialer Richtung begrenzt, und wobei die Stufenpassfeder einen nach radial innen hervorragenden Innenkragen aufweist, welcher gegen die Stirnseite der Rotorwelle angestellt ist und/oder welcher die Rotorwelle entgegen der axialen Richtung begrenzt,
insbesondere wobei der von der Stufenpassfeder in axialer Richtung überdeckte Bereich mit dem von dem Nabenteil in axialer Richtung überdeckten Bereich überlappt und mit dem von der Rotorwelle in axialer Richtung überdeckten Bereich überlappt,
insbesondere wobei die Rotorwelle eine Passfedernut zur Aufnahme der Stufenpassfeder aufweist und die Passfedernut derart gestuft ausgeführt ist, dass der Innenkragen in der Passfedernut aufgenommen ist, insbesondere so dass der Innenkragen stirnseitig mit der Rotorwelle bündig abschließt und/oder dass der Innenkragen stirnseitig an der Rotorwelle anliegt.

Von Vorteil ist dabei, dass mittels der Stufenpassfeder nicht nur Drehmomentübertragung, sondern weitere Funktionen, wie axiale Begrenzung und/oder Sicherung, ausführbar sind. Somit sind mehrere Funktionen in der Stufenpassfeder integriert, insbesondere so dass der Getriebemotor insgesamt kompakt ausführbar ist. Die erfindungsgemäße Stufenpassfeder ist allerdings mit einer nicht trivialen Geometrie ausgeführt. Dabei ist der Innenkragen vom Außenkragen beabstandet, insbesondere in axialer Richtung beabstandet. Vorzugsweise sind der Innenkragen am ersten axialen Endbereich und der Außenkragen am anderen axialen Endbereich der Stufenpassfeder angeordnet.

Wichtige Merkmale bei dem Verfahren zum Herstellen eines Adapters aus einem Baukasten sind, dass der Baukasten
- ein erstes Gehäuseteil,
- ein zweites Gehäuseteil,
- einen Zwischenflansch und
- ein erstes Lager,
aufweist,
wobei wahlweise ein erster Adapter oder ein zweiter Adapter hergestellt wird,
wobei zur Herstellung des ersten Adapters, das erste Gehäuseteil direkt mit dem zweiten Gehäuseteil verbunden wird, wobei der Außenring des ersten Lagers im ersten und im zweiten Gehäuseteil aufgenommen wird und das erste zum zweiten Gehäuseteil zentriert,
wobei zur Herstellung des zweiten Adapters, das erste Gehäuseteil direkt mit dem Zwischenflansch verbunden wird und der Zwischenflansch auf seiner vom ersten Gehäuseteil abgewandten Seite direkt mit dem zweiten Gehäuseteil verbunden wird, wobei der Außenring des ersten Lagers im ersten Gehäuseteil und im Zwischenflansch aufgenommen wird und das erste Gehäuseteil zum Zwischenflansch zentriert,
insbesondere wobei der Außenring des ersten Lagers axial begrenzt ist von einer Stufe des ersten Gehäuseteils und einem Außenring eines Freilaufs und wobei der Außenring des Freilaufs auf der vom Außenring des ersten Lagers abgewandten Seite des Außenrings des Freilaufs gegen eine Stufe des Zwischenflansches angestellt ist.

Von Vorteil ist dabei, dass für unterschiedliche Applikationen ein optimaler Getriebemotor herstellbar ist. Beispielsweise ist ein mit dem ersten Adapter gebildeter Getriebemotor kompakt ausführbar und ein mit dem zweiten Adapter gebildeter Getriebemotor mit Zusatzfunktion, wie zusätzliche Abdichtung oder Freilauf, ausführbar.

Die Erfindung wird nun anhand von schematischen Abbildungen näher erläutert:
In der Figur 1 ist eine erfindungsgemäße Klauenkupplung mit Adapterwelle 1 explodiert dargestellt.
In der Figur 2 ist die Klauenkupplung angeschnitten dargestellt.
In der Figur 3 ist ein Adapter in Schnittansicht dargestellt, wobei die Klauenkupplung umfasst ist.
In der Figur 4 ist eine Seitenansicht der Adapterwelle 1 dargestellt.
In der Figur 5 ist ein Ausschnitt der Figur 4 vergrößert dargestellt.
In der Figur 6 ist eine zweite Klauenkupplung angeschnitten in Schrägansicht dargestellt.
In der Figur 7 ist ein weiterer Adapter in Schnittansicht dargestellt, welcher ähnlich ist zu dem in Figur 3 gezeigten Adapter.
In der Figur 8 ist ein weiterer Adapter in Schnittansicht dargestellt, wobei ein einen Wellendichtring 81 aufnehmender Zwischenflansch 80 vorgesehen ist.
In der Figur 9 ist ein weiterer Adapter in Schnittansicht dargestellt, wobei ein einen Freilauf aufnehmender Zwischenflansch 80 vorgesehen ist.
In der Figur 10 ist die Betätigung einer zur Passfederverbindung der Rotorwelle 20 mit dem Kupplungsteil 7 alternativen Klemmverbindung zum kraftschlüssigen Verbinden dargestellt.
In der Figur 11 ist für ein weiteres erfindungsgemäßes Ausführungsbeispiel der durch eine Stufenpassfeder 110 zur formschlüssigen Verbindung des Kupplungsteils 7 mit der Rotorwelle 20 bewirkte Verbindungsbereich angeschnitten dargestellt.
In der Figur 12 ist der angeschnittene Verbindungsbereich in Schrägansicht dargestellt.
In der Figur 13 ist die Stufenpassfeder 110 in Schrägansicht dargestellt.

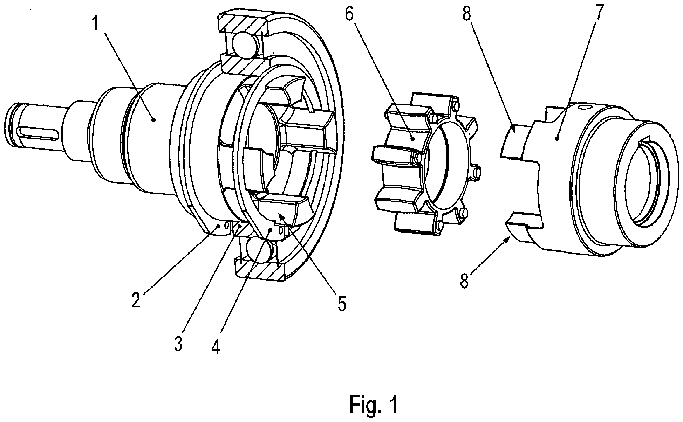

Wie in den Figuren 1 bis 5 dargestellt, weist die Adapterwelle 1 an ihrem dem Kupplungsteil 7 zugewandten axialen Endbereich Klauen 5 auf, welche einen axialen Bereich überdecken, der mit dem von Klauen 8 des Kupplungsteils 7 überdeckten axialen Bereich überlappt.

Die axiale Richtung ist dabei parallel zur Drehachse der Adapterwelle 1. Die Radialabstände sind bezogen auf die Drehachse der Adapterwelle 1.

Ein Dämpfungsteil 6 ist als Kunststoffstern ausgeformt. Hierzu weist das Dämpfungsteil 6 einen ringförmigen Grundkörper auf, an dem radial hervorragende Strahlenbereiche ausgebildet sind.

Der Grundkörper ist radial innerhalb der Klauen 5 und 8 angeordnet. Der von den Strahlenbereichen in radialer Richtung überdeckte Radialabstandsbereich umfasst oder zumindest überlappt mit dem von den Klauen 5 der Adapterwelle 1 in radialer Richtung überdeckten Radialabstandsbereich und mit dem von den Klauen 8 des Kupplungsteils 7 in radialer Richtung überdeckten Radialabstandsbereich.

Das Dämpfungsteil 6, insbesondere also die Strahlenbereiche, sind in Umfangsrichtung zwischen den Klauen 5 der Adapterwelle 1 und den Klauen 8 des Kupplungsteils 7 angeordnet.

Die Strahlenrichtung sind in radialer Richtung ballig ausgeführt. Somit weist die in Umfangsrichtung gemessene Wandstärke des jeweiligen Strahlenbereichs in radialer Richtung ein lokales Maximum auf.

Der von den Klauen 5 der Adapterwelle 1 in axialer Richtung überdeckte Bereich überlappt mit dem von den Klauen 8 des Kupplungsteils 7 in axialer Richtung überdeckten Bereich.

Das Kupplungsteil ist auf eine Rotorwelle 20 aufgesteckt, die durch das Kupplungsteil 7 hindurchragt, bis in einen hohlen Bereich der Adapterwelle 1 hinein.

Die Rotorwelle 20 ist mit dem Kupplungsteil 7, insbesondere mittels einer Passfederverbindung, drehfest verbunden.

Auf die Adapterwelle 1 ist ein Lager aufgesteckt, das vorzugsweise als Festlager fungiert.

Hierzu ist der Innenring 3 des Lagers auf die Adapterwelle 1 aufgesteckt und axial beidseitig mittels zweier Sicherungsringe (2, 4) begrenzt.

Dabei ist ein erster Sicherungsring 2 der beiden Sicherungsringe (2, 4) in einer ersten Ringnut der Adapterwelle 1 vorgesehen, wobei diese erste Ringnut in axialer Richtung beabstandet ist von dem von den Klauen 5 der Adapterwelle 1 in axialer Richtung überdeckten Bereich. Somit ist die erste Ringnut in Umfangsrichtung vollständig umlaufend ununterbrochen ausgeführt.

Der zweite Sicherungsring 2 der beiden Sicherungsringe (2, 4) ist in einer zweiten Ringnut der Adapterwelle 1 vorgesehen, wobei diese zweite Ringnut in axialer Richtung innerhalb von dem von den Klauen 5 der Adapterwelle 1 in axialer Richtung überdeckten Bereich angeordnet ist. Somit ist die zweite Ringnut in Umfangsrichtung mehrfach unterbrochen ausgeführt. Denn die Klauen 5 sind in Umfangsrichtung voneinander beabstandet, insbesondere gleichmäßig.

Da der Innenring 3 des Lagers auf die Adapterwelle 1 aufgesteckt ist und die Adapterwelle 1 in dem axial zwischen den beiden Sicherungsringen 2 und 4 liegenden Bereich berührt, ist der Innenring 3 in den Bereichen zwischen den Klauen 5 nicht abgestützt. Der Lagersitz ist hier also in Umfangsrichtung mehrfach unterbrochen ausgeführt.

Der an der Adapterwelle 1 zur Aufnahme des Innenrings 3 ausgebildete Lagersitz überdeckt also in axialer Richtung einen Bereich, der mit dem von den Klauen 5 des Adapterteils 1 in axialer Richtung überdeckten Bereich überlappt.

Somit ist der Lagersitz in einem ersten Bereich unterbrochen und in einem weiteren Bereich ununterbrochen ausgeführt.

Der erste Bereich trägt 30 % bis 70% zur gesamten axialen Breite des Lagersitzes bei. Der weitere, also ununterbrochene Bereich trägt den restlichen Teil bei.

Besonders bevorzugt ist allerdings eine Ausführung, bei welcher der erste Bereich weniger als die Hälfte, also weniger als 50%, der gesamten axialen Breite des Lagersitzes beiträgt.

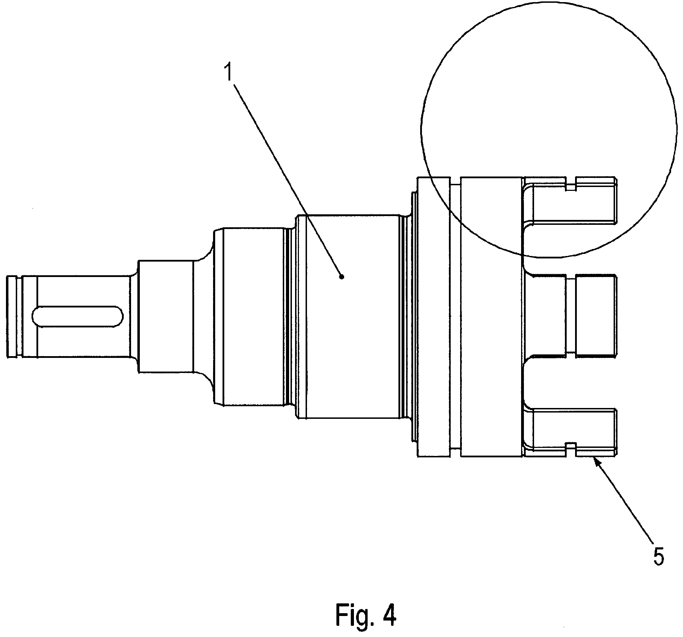

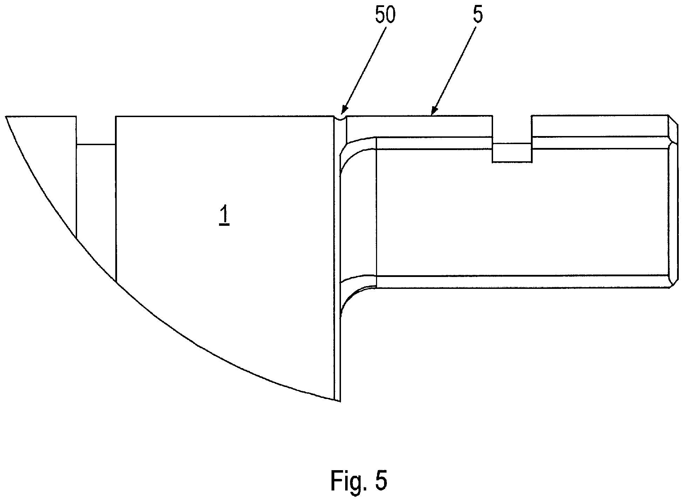

Wie besonders deutlich in Figur 5, die einen Bereich der Figur 4 vergrößert darstellt, zu erkennen, ist am Adapterteil 1 eine Ausnehmung 50 ausgeführt, welche in Umfangsrichtung umläuft. Vorzugsweise ist die Ausnehmung 50 mit Drehen bearbeitet, insbesondere also als Ausdrehung ausgeführt.

Diese Ausdrehung 50 ist im axialen Übergangsbereich zwischen dem ersten und dem weiteren Bereich angeordnet. Somit ist die Ausnehmung 50, insbesondere Ausdrehung, am Rand des von den Klauen 5 in axialen Richtung überdeckten Bereichs angeordnet.

Die Ausnehmung 50, insbesondere Ausdrehung, grenzt also den Bereich des in Umfangsrichtung unterbrochenen Lagersitzes vom restlichen Lagersitz, also vom in Umfangsrichtung ununterbrochen ausgeführten Bereich des Lagersitzes, ab.

Daher ist die Ausnehmung 50 in axialer Richtung zwischen der ersten Ringnut für den ersten Sicherungsring 2 und der zweiten Ringnut für den zweiten Sicherungsring 4 angeordnet.

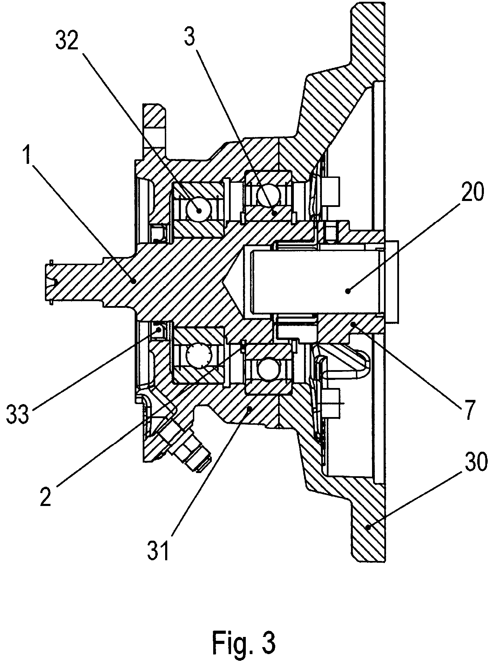

Wie in Figur 3 gezeigt, ist auf die Adapterwelle 1 ein zweites Lager aufgesteckt, das in einem zweiten Gehäuseteil 31 aufgenommen ist und als Loslager fungiert.

Das zweite Gehäuseteil 31 ist mit einem ersten Gehäuseteil 30 verbunden, insbesondere mittels Schrauben.

Der Innenring 3 des ersten Lagers weist zwar - wie oben beschrieben - teilweise einen unterbrochenen Lagersitz auf, jedoch ist der Außenring dieses ersten Lagers teilweise im ersten Gehäuseteil 30 und teilweise im weiten Gehäuseteil 31 aufgenommen.

Somit bewirkt der Außenring des ersten Lagers die Zentrierung des ersten Gehäuseteils 30 zum zweiten Gehäuseteil 31. Außerdem ist im ersten Gehäuseteil 30 ein Wellendichtring 33 aufgenommen, der zur Adapterwelle 1 hin abdichtet. Somit ist das erste Gehäuseteil an ein Getriebegehäuse verbindbar, dessen Innenraum zumindest teilweise mit Öl befüllt ist.

Die Adapterwelle ragt ins Getriebe hinein und ist drehfest mit einem eintreibenden Verzahnungsteil des Getriebes verbunden.

Vorzugsweise ist der Außendurchmesser der Klauen 8 des Kupplungsteils 7 kleiner als der lichte Innendurchmesser des zweiten Sicherungsrings 4, welcher in der in Umfangsrichtung unterbrochenen Ringnut des Adapterteils 1 aufgenommen ist.

Bei weiteren erfindungsgemäßen Ausführungsbeispielen ist das eintreibende Verzahnungsteil mit der Adapterwelle 1 einstückig, also einteilig, ausgeführt.

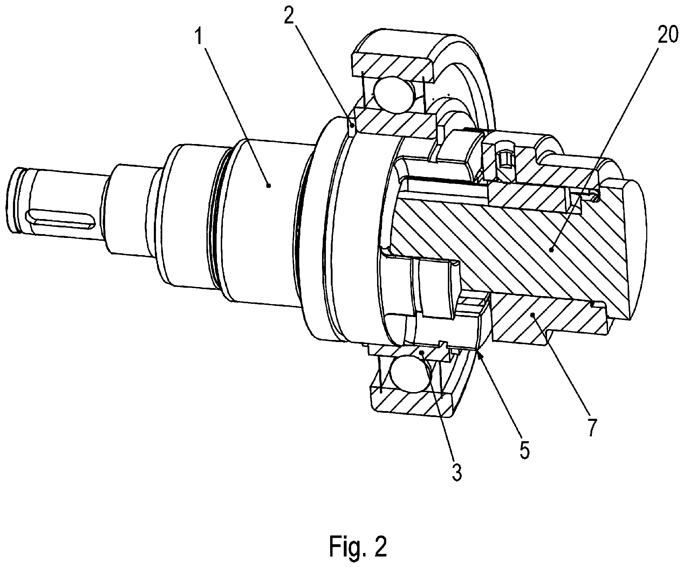

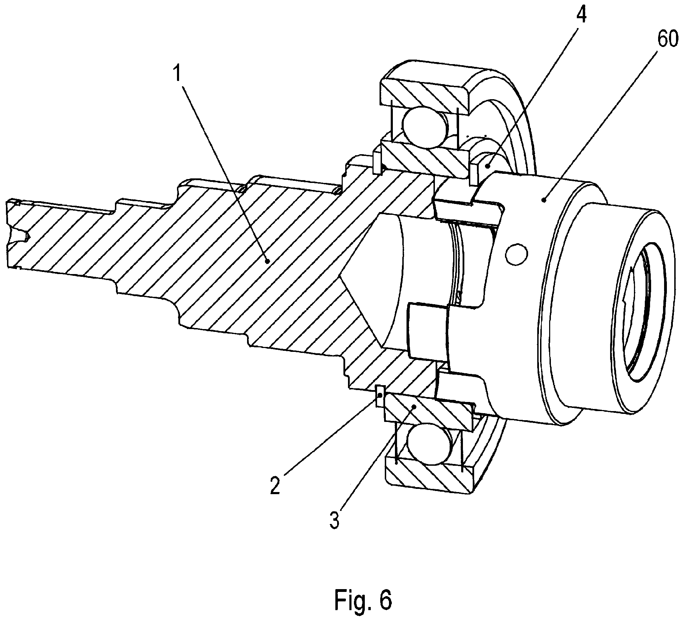

Bei der Ausführung nach Figur 6 ragen die Klauen 5 des Adapterteils im Unterschied zu der Ausführung nach Figur 2 nicht durch den Innenring 3 axial hindurch, sondern der Innenring 3 überragt das Adapterteil 1 axial zum Kupplungsteil 60 hin, dessen Klauen 8 ebenfalls entsprechend kürzer sind im Vergleich zu Figur 2.

Der zweite Sicherungsring 4 ist somit in einer Ringnut des Kuppplungsteils 60 aufgenommen und begrenzt den Innenring 3 entsprechend.

Auf diese Weise ist eines besondere geringe axiale Breite der Kupplung erreichbar, wobei der Innenring 3 einerseits vom ersten Sicherungsring 2, der in einer Ringnut des Adapterteils 1 aufgenommen ist, begrenzt wird und andererseits vom zweiten Sicherungsring 4, der in einer Ringnut des Kupplungsteils 60 aufgenommen ist.

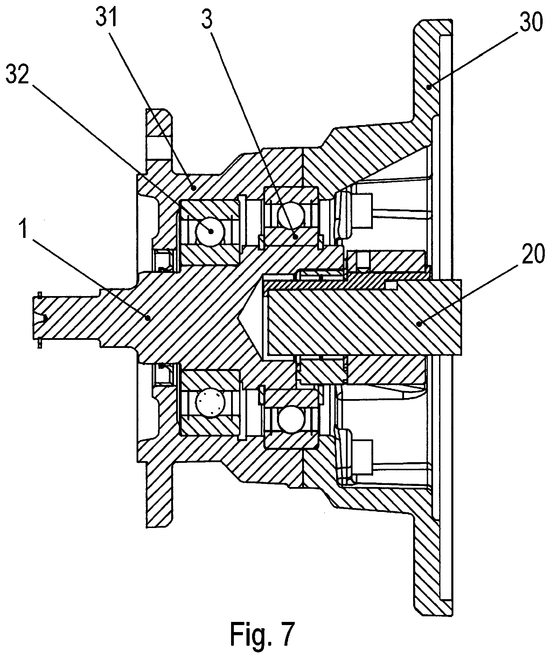

Wie in Figur 7 ersichtlich, ist der Außenring des ersten Lagers einerseits in einer Bohrung des ersten Gehäuseteils 30 und andererseits in einer Bohrung des zweiten Gehäuseteils 31 aufgenommen. Der Außenring zentriert die beiden Gehäuseteile (30, 31) zueinander.

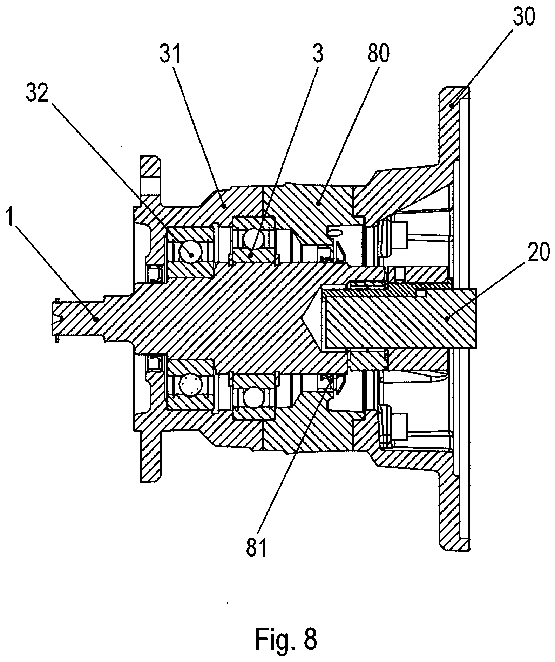

Wie in Figur 8 gezeigt, ist bei einer anderen Ausführungsvariante des Adapters zwischen dem ersten Gehäuseteil 30 und dem zweiten Gehäuseteil 31 ein Zwischenflansch 80 angeordnet, in welchem ein Wellendichtring 81 aufgenommen ist, der zur Adapterwelle 1 hin abdichtet. Die Dichtlippe des Wellendichtrings 81 läuft also auf einer fein bearbeiteten Dichtfläche der Adapterwelle 1.

Bei dieser Variante nach Figur 8 zentriert der Außenring des ersten Lagers den Zwischenflansch 80 zum zweiten Gehäuseteil 31 hin, da der Außenring einerseits in einer Bohrung des Zwischenflansches 80, die der Bohrung des ersten Gehäuseteils 30 gleicht und andererseits in der Bohrung des zweiten Gehäuseteils 31 aufgenommen ist.

Die Bohrungstiefe der Bohrung des Zwischenflansches 80 zur Aufnahme des Außenrings gleicht dabei der Bohrungstiefe der Bohrung des ersten Gehäuseteils 30, das bei der Variante nach Figur 7 als Aufnahme des Außenrings fungiert.

Auf diese Weise ersetzt also der Zwischenflansch 80 das erste Gehäuseteil 30 bei der Aufnahme des Außenrings des ersten Lagers.

Die genannten Bohrungen sind als Sacklochbohrungen ausgeführt und eindeutig definiert durch ihren Durchmesser und die Bohrtiefe.

Auf diese Weise ist also der Zwischenflansch 80 zum zweiten Gehäuseteil 31 hin identisch ausgeführt wie das erste Gehäuseteil 30 zum zweiten Gehäuseteil 31 hin.

Der Zwischenflansch 80 weist auf seiner vom zweiten Gehäuseteil 31 abgewandten Seite eine axial hervorstehenden Zentrierkragen auf, dessen Außendurchmesser dem Außendurchmesser des Außenrings des ersten Lagers gleicht und dessen axiale Ausdehnung der Bohrtiefe derjenigen Bohrung des ersten Gehäuseteils 30 gleichen, welche zur Aufnahme des Außenrings des ersten Lagers in der Ausführung nach Figur 7 vorgesehen ist.

Somit ist der Zwischenflansch 80 zum ersten Gehäuseteil 31 hin identisch ausgeführt wie ein gedachtes Teil, welches aus dem zweiten Gehäuseteil 30 und dem Außenring des ersten Lagers gemäß der Ausführung nach Figur 7 besteht, zum ersten Gehäuseteil 31 hin, wobei die radiale Wandstärke des Zentrierkragens geringer sein darf als die radiale Wandstärke des Außenrings.

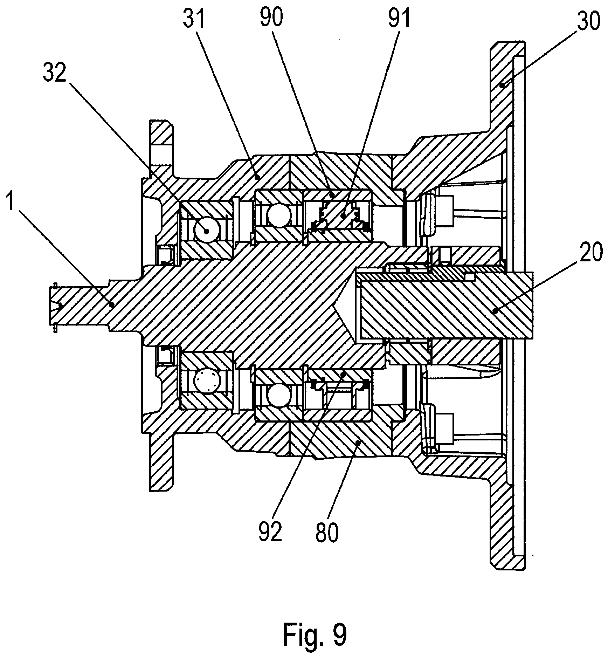

Wie in Figur 9 gezeigt, ist statt des Wellendichtrings 81 ein Freilauf, insbesondere ein Klemmkörperfreilauf, aufnehmbar, der einen Innenring 92 und einen Außenring 90 sowie weitere Komponenten, wie Klemmkörper 91, aufweist.

Wichtig ist dabei, dass der Außenring 90 des Freilaufs an einer Stufe des Zwischenflansches 80 angestellt ist und der Außenring des ersten Lagers am Außenring 90 des Freilaufs anliegt und somit gegen diesen Außenring 90 angestellt ist. Hierzu wird also die Bohrtiefe des zum zweiten Gehäuseteil 31 zugewandten Bohrlochs um die axiale Länge des Außenrings 90 des Freilaufs verlängert.

Wie in den Figuren 7 bis 9 dargestellt, ist zwischen der Rotorwelle 20 und dem Kupplungsteil 7 eine Passfederverbindung ausgeführt. Die Passfeder ist dabei als Stufenpassfeder ausgeführt, weist also in axialer Richtung einen monoton steigenden maximalen Radialabstand zur Drehachse der Rotorwelle 20 auf.

Somit ist das Kupplungsteil 7 axial gegen eine Stufe der Passfeder anstellbar und auf diese Weise axial auf der Rotorwelle 20 positioniert.

Trotzdem weist das erste Gehäuseteil 30 vier in Umfangsrichtung voneinander beabstandete, insbesondere gleichmäßig beabstandet Durchgangsbohrungen 100 auf.

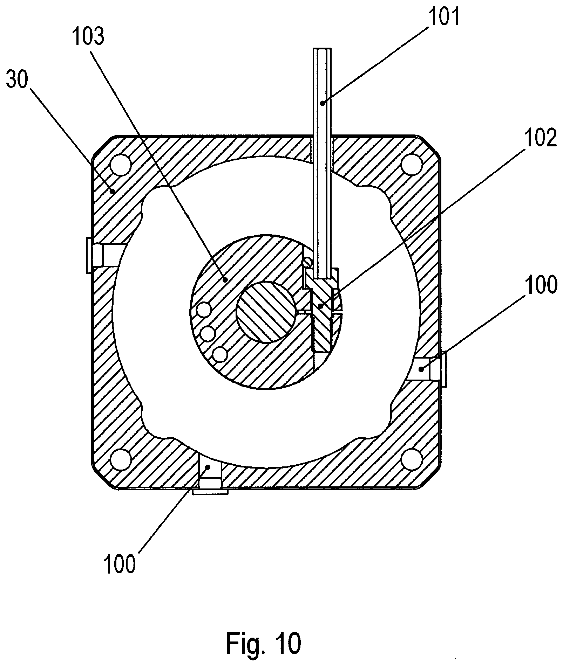

Wie in Figur 10 dargestellt, ist statt der Passfederverbindung die Rotorwelle 20 mittels eines Klemmrings 103 mit dem Kupplungsteil 7 kraftschlüssig verbindbar. Zur Betätigung der

Klemmschraube 102 der Klemmverbindung ist ein Werkzeug durch eine der vier Durchgangsbohrungen 100 hindurchführbar. Hierbei ist die Schraubenachse der Klemmschaube 102 bei einer Winkelstellung der Rotorwelle 20 in Flucht mit der Durchgangsbohrung, insbesondere mit der Bohrungsachse der Durchgangsbohrung 100.

Alle Durchgangsbohrungen 100 sind während des Betriebes verschlossen mittels eines in die jeweilige Durchgangsbohrung 100 eingesteckten Verschlussstopfens.

Da das zweite Gehäuseteil 30 in allen Adaptern identisch ausgeführt ist, weist das zweite Gehäuseteil 30 auch bei der Variante des Adapters mit Klauenkupplung die Durchgangsbohrungen 100 auf, die mit Verschlussstopfen verschlossen sind. Somit sind nur wenige Gehäuseteile zu bevorraten zur Bildung einer Baureihe von Adaptern.

Bei weiteren erfindungsgemäßen Ausführungsbeispielen ist der Klauenbereich der Adapterwelle 1 derart weit in axialer Richtung erstreckt, dass der Innenring des Freilaufs auf den Klauenbereich aufgeschoben ist, also der Sitz für den Innenring des Freilaufs unterbrochen ausgeführt ist. Wie auch in Figur 3 ist der Innenring 2 des ersten Lagers in Umfangsrichtung teilweise unterbrochen und teilweise ununterbrochen ausgeführt, weil der Innenring 2 des ersten Lagers axial überlappt mit dem Klauenbereich, also mit dem in axialer Richtung von den Klauen 5 der Adapterwelle 1 überdeckten Bereich.

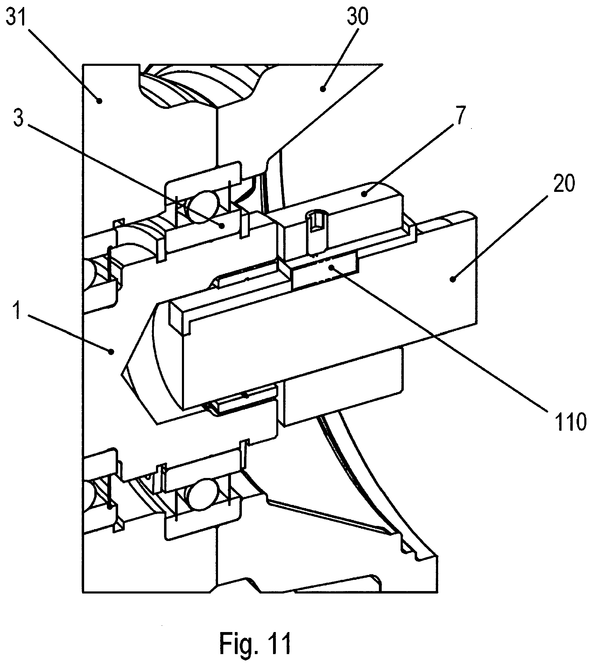

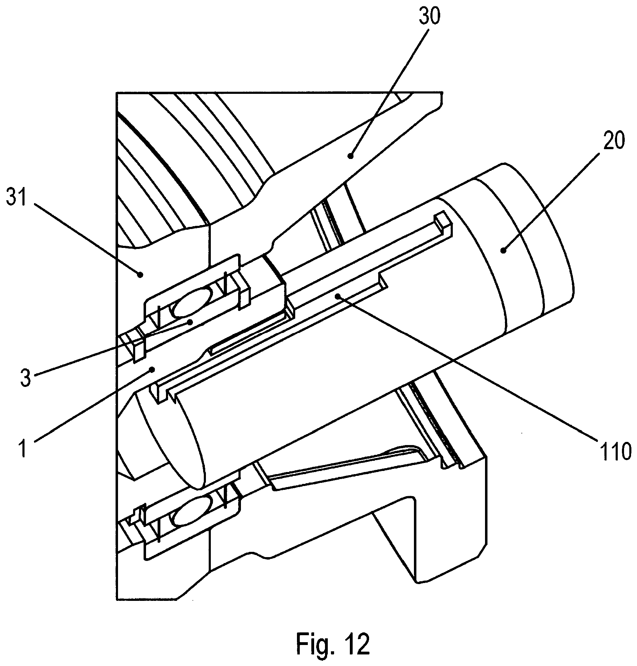

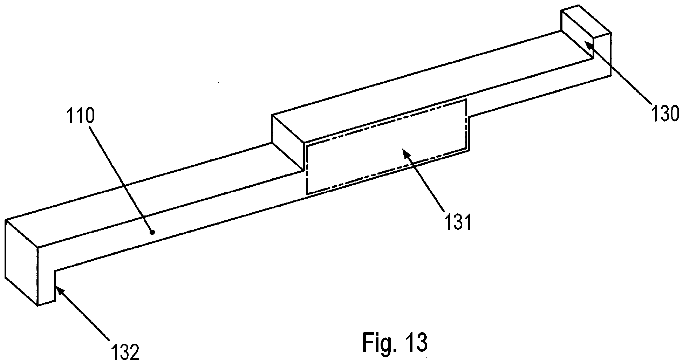

Wie in den Figuren 11 bis 13 dargestellt, ist die Stufenpassfeder 110 mit einem nach radial außen hervorstehenden Außenkragen 130 zur axialen Positionierung des Kupplungsteils 7 und einem nach radial innen hervorstehenden Innenkragen 132 als Anschlagsfläche für die Stirnseite der Rotorwelle 20 ausgeführt.

Der drehmomentübertragender Bereich 131 ist in Umfangsrichtung gerichtet, also als ebene Seitenfläche der Stufenpassfeder 110 ausgeführt, wobei die Normalenrichtung der Seitenfläche tangential ausgerichtet ist.

Der von der Stufenpassfeder 110 überdeckte Radialabstandsbereich überlappt sowohl mit dem von der Rotorwelle 20 überdeckten Radialabstandsbereich als auch mit dem von dem Kupplungsteil 7 überdeckten Radialabstandsbereich.

Die Stufenpassfeder 110 ragt also sowohl in eine Passfedernut der Rotorwelle 20 hinein als auch in eine Passfedernut des Kupplungsteils 7.

Da das Kupplungsteil 7 von dem Außenkragen 130 axial begrenzt wird, indem das Kupplungsteil 7 beim Anstehen gegen den Außenkragen 130 die Stufenpassfeder 110 in axialer Richtung drückt und somit den Innenkragen 132 gegen die Stirnseite der Rotorwelle 20 drückt, ist der axiale Bewegungsfreiheitsgrad des Kupplungsteils 7 derart begrenzt, dass die Klauen (5, 8) nicht axial voneinander entfernbar sind. Somit ist die Drehmomentübertragung, insbesondere der Klauen (5, 8), durch die Stufenpassfeder 110 gesichert.

Im dem von dem drehmomentübertragenden Bereich 131 in axialer Richtung überdeckten Bereich weist die Stufenpassfeder 110 die größte radiale Ausdehnung, insbesondere die größte radiale Wandstärke, auf. Somit ist ein großes Drehmoment durch die Stufenpassfeder 110 übertragbar. Für die axiale Positionierung des Kupplungsteils 7 sind nur geringe Kräfte notwendig.

Die Passfedernut der Rotorwelle 20 ist derart gestuft ausgeführt, dass der Innenkragen 132 stirnseitig bündig ausgenommen ist. Alternativ mündet die Passfedernut im axialen Endbereich ohne Stufe in die Umgebung, so dass der Innenkragen 132 an der Stirnseite der Rotorwelle 20 von außen anliegt.

### Bezugszeichenliste

1 Adapterwelle
2 Sicherungsring
3 Innenring des Festlagers
4 Sicherungsring
5 Klauen
6 Dämpfungsteil
7 Kupplungsteil, insbesondere Kupplungsnabe
8 Klauen
20 Rotorwelle
30 erstes Gehäuseteil
31 zweiten Gehäuseteil
32 Loslager
33 Wellendichtring
50 Ausnehmung, umlaufende Ausdrehung
60 Kupplungsteil
80 Zwischenflansch
81 Wellendichtring
90 Außenring
91 Klemmkörper
92 Innenring
100 Durchgangsbohrung
101 Werkzeug
102 Klemmschraube
103 Klemmring
110 Stufenpassfeder
130 Außenkragen zur axialen Positionierung des Kupplungsteils 7
131 drehmomentübertragender Bereich
132 Innenkragen als Anschlagsfläche für die Stirnseite der Rotorwelle 20

## Patentansprüche

1. Adapterbaureihe für Getriebemotoren, die einen ersten Adapter und einen zweiten Adapter aufweist, **wobei der erste Adapter und der zweite Adapter Adaptertypen, nämlich Adaptervarianten, der Adapterbaureihe darstellen,**
(i) wobei der erste Adapter eine Adapterwelle (1), ein erstes Lager und ein Gehäuse aufweist, das ein erstes und ein zweites Gehäuseteil (30, 31) aufweist,
wobei das erste Gehäuseteil (30) mit dem zweiten Gehäuseteil (31) verbunden ist, insbesondere direkt verbunden ist, insbesondere zur Bildung des Gehäuses,
wobei der Innenring (3) des ersten Lagers auf die Adapterwelle (1) aufgesteckt ist,
wobei der Außenring (90) des ersten Lagers im ersten und im zweiten Gehäuseteil (30, 31) aufgenommen ist und das erste Gehäuseteil (30) zum zweiten Gehäuseteil (31) zentriert,
(ii)wobei der zweite Adapter eine zweite Adapterwelle (1), ein zum ersten Lager identisch ausgeführtes erstes Lager und ein zweites Gehäuse aufweist,
**dadurch gekennzeichnet, dass**
**das zweite Gehäuse** ein zum ersten Gehäuseteil (30) identisch ausgeführtes erstes Gehäuseteil (30), ein zum zweiten Gehäuseteil (31) identisch ausgeführtes zweites Gehäuseteil (31) und einen Zwischenflansch (80) aufweist,
wobei das erste Gehäuseteil (30) des zweiten Adapters mit dem Zwischenflansch (80) verbunden ist, insbesondere direkt verbunden ist, und der Zwischenflansch (80) auf seiner insbesondere in axialer Richtung, also in Richtung der Drehachse der zweiten Adapterwelle (1), vom ersten Gehäuseteil (30) abgewandten Seite mit dem zweiten Gehäuseteil (31) verbunden ist, insbesondere direkt verbunden ist, insbesondere zur Bildung des Gehäuses, wobei der Innenring (3) des ersten Lagers des zweiten Adapters auf die Adapterwelle (1) aufgesteckt ist,
wobei der Außenring (90) des ersten Lagers des zweiten Adapters im ersten Gehäuseteil (30) und im Zwischenflansch (80) aufgenommen ist und das erste Gehäuseteil (30) zum Zwischenflansch (80) zentriert,
wobei im Zwischenflansch (80) ein Wellendichtring (33) aufgenommen ist oder ein Freilauf aufgenommen ist.

2. Adapterbaureihe nach Anspruch 1,
**dadurch gekennzeichnet, dass**
das zweite Gehäuseteil (31) Durchgangsbohrungen (100), insbesondere also durchgehende Bohrungen, insbesondere radial durchgehende Bohrungen, aufweist,
wobei die Durchgangsbohrungen (100) in Umfangsrichtung voneinander, insbesondere gleichmäßig, beabstandet sind,
insbesondere wobei die Durchgangsbohrungen (100) alle an derselben axialen Position angeordnet sind,
insbesondere wobei die jeweilige Durchgangsbohrung (100) jeweils mit einem insbesondere jeweiligen Verschlussstopfen verschlossen ist,
insbesondere wobei die Bohrungsachse jeder Durchgangsbohrung (100) bei einer jeweiligen Winkelstellung der Adapterwelle (1) in Flucht bringbar sind zu der Schraubenachse einer Klemmschraube (102) eines mit der Adapterwelle (1) drehfest verbindbaren Klemmrings (103) des ersten oder zweiten Adapters.

3. Adapterbaureihe nach Anspruch 1,
**dadurch gekennzeichnet, dass**
beim ersten Adapter der Außenring (90) des ersten Lagers einerseits in einer Bohrung des ersten Gehäuseteils (30) und andererseits in einer Bohrung des zweiten Gehäuseteils (31) aufgenommen ist
wobei die Summe der Bohrtiefen der beiden Bohrungen der axialen Länge des Außenrings (90) gleicht,
wobei beim zweiten Adapter der Außenring (90) des ersten Lagers einerseits in einer Bohrung des ersten Gehäuseteils (30) und andererseits in einer Bohrung des Zwischenflansches (80) aufgenommen ist
wobei beim zweiten Adapter die Summe der Bohrtiefen der beiden Bohrungen der axialen Länge des Außenrings (90) gleicht oder der Summe der axialen Längen des Außenrings (90) des ersten Lagers und des Außenrings des Freilaufs gleicht.

4. Adapterbaureihe nach einem der vorangegangenen Ansprüche,
**dadurch gekennzeichnet, dass**
der erste Adapter ein Kupplungsteil (7) aufweist,
wobei die Adapterwelle (1) Klauen (5), insbesondere in axialer Richtung hervorragende Klauen (5), aufweist,
wobei der Innenring (3) des ersten Lagers auf einen an der Adapterwelle (1) vorgesehenen, insbesondere fein bearbeiteten, Lagersitz aufgesteckt ist,
wobei der Lagersitz in axialer Richtung einen ersten Bereich überdeckt, in welchem der Lagersitz in Umfangsrichtung ununterbrochen ausgebildet ist, und einen zweiten Bereich, in welchem der Lagersitz in Umfangsrichtung insbesondere mehrfach unterbrochen ausgebildet ist.

5. Adapterbaureihe nach Anspruch 4,
**dadurch gekennzeichnet, dass**
zwischen weiteren Klauen (8) des Kupplungsteils (7) und den Klauen (5) der Adapterwelle (1) ein Dämpfungsteil (6) angeordnet ist,
insbesondere wobei das Dämpfungsteil (6) einen Grundkörper und daran angeformte in radialer Richtung hervorragende Strahlenbereiche aufweist,
wobei die Strahlenbereiche axial zwischen je einer Klaue des Kupplungsteils (7) und einer des Adapterteils angeordnet ist.

6. Adapterbaureihe nach **Anspruch 4 oder 5,**
**dadurch gekennzeichnet, dass**
in axialer Richtung zwischen dem ersten Bereich und dem zweiten Bereich eine in Umfangsrichtung umlaufende Ausnehmung (50), insbesondere eine Ausdrehung, an der Adapterwelle (1) ausgebildet ist.

7. Adapterbaureihe nach **Anspruch 4, 6 oder 5,**
**dadurch gekennzeichnet, dass**
der von den Klauen (5) in axialer Richtung überdeckte Bereich den ersten Bereich umfasst und von dem zweiten Bereich in axialer Richtung beabstandet ist,
und/oder dass
die axiale Richtung zur Drehachse der Adapterwelle (1) parallel ausgerichtet ist,
insbesondere wobei die Umfangsrichtung und/oder der Radialabstand auf diese Drehachse bezogen ist oder sind.

8. Adapterbaureihe nach einem der vorangegangenen Ansprüche,
**dadurch gekennzeichnet, dass**
der Innenring (3) axial beidseitig durch Sicherungsringe (2, 4) begrenzt ist,
und/oder dass
ein erster Sicherungsring (2) in einer ersten Ringnut, insbesondere in einer vollständig und/oder ununterbrochen in Umfangsrichtung umlaufenden ersten Ringnut, der Adapterwelle (1) aufgenommen ist und den Innenring (3) begrenzt,
wobei die erste Ringnut von dem ersten Bereich und/oder von den Klauen (5) in axialer Richtung beabstandet ist,
und/oder dass
ein zweiter Sicherungsring (4) den Innenring (3), insbesondere auf der in axialer Richtung vom ersten Sicherungsring (2) abgewandten Seite des Innenrings, begrenzt,
wobei der zweite Sicherungsring (4) in einer zweiten Ringnut aufgenommen ist.

9. Adapterbaureihe nach **Anspruch 8,**
**dadurch gekennzeichnet, dass**
die zweite Ringnut in Umfangsrichtung insbesondere mehrfach unterbrochen ausgeführt ist und/oder wobei die zweite Ringnut im zweiten Bereich angeordnet ist.

10. Adapterbaureihe nach **Anspruch 8** oder 9 und 5-7
**dadurch gekennzeichnet, dass**
die zweite Ringnut in den Klauen (5) des Adapterteils eingebracht ist und/oder in den weiteren Klauer (8) des Kupplungsteils (7).

11. Adapterbaureihe nach **Anspruch 8, 10** oder 9 und 4-7,
**dadurch gekennzeichnet, dass**
die zweite Ringnut in Umfangsrichtung ununterbrochen ausgeführt ist und im Kupplungsteil (7) eingebracht ist.

12. Adapterbaureihe nach einem dem Ansprüche 4-7 oder 10-11
**dadurch gekennzeichnet, dass**
das erste Lager als Festlager ausgebildet ist,
und/oder dass
der Adapter ein zweites Lager, insbesondere ein als Loslager (32) ausgebildetes Lager, aufweist,
dessen Außenring (90) im ersten Gehäuseteil (30) aufgenommen ist und dessen Innenring (3) auf die Adapterwelle (1) aufgesteckt ist,
insbesondere wobei im ersten Gehäuseteil (30), insbesondere auf der vom Kupplungsteil (7) abgewandten Seite des zweiten Lagers ein Wellendichtring (33) aufgenommen ist, der zur Adapterwelle (1) hin abdichtet, insbesondere dessen Dichtlippe auf der Adapterwelle (1) läuft.

13. Verfahren zum Herstellen **von Adaptern einer Adaptertypen aufweisenden** Adapterbaureihe nach einem der vorangegangenen Ansprüche aus einem Baukasten, welcher
- ein erstes Gehäuseteil (30),
- ein zweites Gehäuseteil (31),
- einen Zwischenflansch (80) und
- ein erstes Lager,
aufweist,
**wobei als ein erster Adaptertyp der Adapterbaureihe** ein erster Adapter **und als ein zweiter Adaptertyp der Adapterbaureihe** ein zweiter Adapter hergestellt wird,
wobei zur Herstellung des ersten Adapters, das erste Gehäuseteil (30) direkt mit dem zweiten Gehäuseteil (31) verbunden wird, wobei der Außenring (90) des ersten Lagers im ersten und im zweiten Gehäuseteil (31) aufgenommen wird und das erste zum zweiten Gehäuseteil (31) zentriert,
**dadurch gekennzeichnet, dass**
zur Herstellung des zweiten Adapters, das erste Gehäuseteil (30) direkt mit **einem oder dem** Zwischenflansch (80) verbunden wird und der Zwischenflansch (80) auf seiner vom ersten Gehäuseteil (30) abgewandten Seite direkt mit dem zweiten Gehäuseteil (31) verbunden wird, wobei der Außenring (90) des ersten Lagers im ersten Gehäuseteil (30) und im Zwischenflansch (80) aufgenommen wird und das erste Gehäuseteil (30) zum Zwischenflansch (80) zentriert,
insbesondere wobei der Außenring (90) des ersten Lagers axial begrenzt ist von einer Stufe des ersten Gehäuseteils (30) und einem Außenring eines Freilaufs und wobei der Außenring des Freilaufs auf der vom Außenring (90) des ersten Lagers abgewandten Seite des Außenrings des Freilaufs gegen eine Stufe des Zwischenflansches (80) angestellt ist.

## Claims

1. Adapter series for gear motors, having a first adapter and a second adapter, wherein the first adapter and the second adapter constitute adapter types, namely adapter variants, of the adapter series,
(i) wherein the first adapter has an adapter shaft (1), a first bearing and a housing, which has a first and a second housing part (30, 31),
wherein the first housing part (30) is connected to the second housing part (31), in particular directly connected, in particular in order to form the housing,
wherein the inner ring (3) of the first bearing is placed onto the adapter shaft (1),
wherein the outer ring (90) of the first bearing is received in the first and in the second housing part (30, 31) and centres the first housing part (30) in relation to the second housing part (31),
(ii) wherein the second adapter has a second adapter shaft (1), a first bearing configured identically to the first bearing, and a second housing,
**characterised in that**
the second housing has a first housing part (30) configured identically to the first housing part (30), a second housing part (31) configured identically to the second housing part (31), and an intermediate flange (80),
wherein the first housing part (30) of the second adapter is connected to the intermediate flange (80), in particular directly connected, and the intermediate flange (80), on its side facing away from the first housing part (30) in particular in the axial direction, i.e. in the direction of the axis of rotation of the second adapter shaft (1), is connected to the second housing part (31), in particular directly connected, in particular in order to form the housing, wherein the inner ring (3) of the first bearing of the second adapter is placed onto the adapter shaft (1),
wherein the outer ring (90) of the first bearing of the second adapter is received in the first housing part (30) and in the intermediate flange (80) and centres the first housing part (30) in relation to the intermediate flange (80),
wherein a shaft seal ring (33) is received in the intermediate flange (80) or a freewheel is received.

2. Adapter series according to claim 1,
**characterised in that**
the second housing part (31) has through-holes (100), i.e. in particular through-going holes, in particular radially through-going holes,
wherein the through-holes (100) are spaced apart from one another, in particular uniformly, in the circumferential direction,
in particular wherein the through-holes (100) are all arranged at the same axial position,
in particular wherein each through-hole (100) is in each case sealed by an in particular respective plug,
in particular wherein the hole axis of each through-hole (100) can, when the adapter shaft (1) is in a particular angular position, be brought into alignment with the screw axis of a clamping screw (102) of a clamping ring (103) of the first or second adapter, which clamping ring can be connected to the adapter shaft (1) for conjoint rotation.

3. Adapter series according to claim 1,
**characterised in that**
in the first adapter, the outer ring (90) of the first bearing is received on one side in a hole in the first housing part (30) and on the other side in a hole in the second housing part (31),
wherein the sum of the drilling depths of the two holes is equal to the axial length of the outer ring (90),
wherein, in the second adapter, the outer ring (90) of the first bearing is received on one side in a hole in the first housing part (30) and on the other side in a hole in the intermediate flange (80),
wherein, in the second adapter, the sum of the drilling depths of the two holes is equal to the axial length of the outer ring (90) or is equal to the sum of the axial lengths of the outer ring (90) of the first bearing and the outer ring of the freewheel.

4. Adapter series according to any of the preceding claims,
**characterised in that**
the first adapter has a clutch part (7),
wherein the adapter shaft (1) has dogs (5), in particular dogs (5) projecting in the axial direction,
wherein the inner ring (3) of the first bearing is placed onto a bearing seat, in particular a finish-machined bearing seat, provided on the adapter shaft (1),
wherein, in the axial direction, the bearing seat covers a first region in which the bearing seat is formed to be continuous in the circumferential direction, and a second region in which the bearing seat is formed to have in particular multiple breaks in the circumferential direction.

5. Adapter series according to claim 4,
**characterised in that**
a damping part (6) is arranged between further dogs (8) of the clutch part (7) and the dogs (5) of the adapter shaft (1),
in particular wherein the damping part (6) has a main body and radiating regions formed thereon projecting in the radial direction,
wherein each radiating region is arranged axially between one dog of the clutch part (7) and one dog of the adapter part.

6. Adapter series according to claim 4 or claim 5,
**characterised in that**
in the axial direction between the first region and the second region, a recess (50) running all around in the circumferential direction, in particular a turned channel, is formed at the adapter shaft (1).

7. Adapter series according to claim 4, claim 6 or claim 5,
**characterised in that**
the region covered by the dogs (5) in the axial direction encompasses the first region and is spaced apart from the second region in the axial direction,
and/or **in that**
the axial direction is oriented in parallel with the axis of rotation of the adapter shaft (1),
in particular wherein the circumferential direction and/or the radial distance is/are based on this axis of rotation.

8. Adapter series according to any of the preceding claims,
**characterised in that**
the inner ring (3) is delimited axially on both sides by securing rings (2, 4),
and/or **in that**
a first securing ring (2) is received in a first annular groove, in particular in a first annular groove that extends entirely and/or continuously all around in the circumferential direction, of the adapter shaft (1) and delimits the inner ring (3),
wherein the first annular groove is spaced apart from the first region and/or from the dogs (5) in the axial direction,
and/or **in that**
a second securing ring (4) delimits the inner ring (3), in particular on the side of the inner ring facing away from the first securing ring (2) in the axial direction,
wherein the second securing ring (4) is received in a second annular groove.

9. Adapter series according to claim 8,
**characterised in that**
the second annular groove is configured to have in particular multiple breaks in the circumferential direction and/or wherein the second annular groove is arranged in the second region.

10. Adapter series according to claim 8 or claim 9 and claims 5-7,
**characterised in that**
the second annular groove is made in the dogs (5) of the adapter part and/or in the further dogs (8) of the clutch part (7).

11. Adapter series according to claim 8, claim 10 or claim 9 and claims 4-7,
**characterised in that**
the second annular groove is configured to be continuous in the circumferential direction and is made in the clutch part (7).

12. Adapter series according to any of claims 4-7 or 10-11,
**characterised in that**
the first bearing is configured as a fixed bearing,
and/or **in that**
the adapter has a second bearing, in particular a bearing configured as a floating bearing (32),
the outer ring (90) of which is received in the first housing part (30) and the inner ring (3) of which is placed onto the adapter shaft (1),
in particular wherein a shaft seal ring (33) is received in the first housing part (30), in particular on the side of the second bearing facing away from the clutch part (7), which shaft seal ring provides sealing towards the adapter shaft (1) and the sealing lip of which in particular runs on the adapter shaft (1).

13. Method for producing adapters of an adapter series, which has adapter types, according to any of the preceding claims from a kit, which comprises
- a first housing part (30),
- a second housing part (31),
- an intermediate flange (80) and
- a first bearing,
wherein a first adapter is produced as a first adapter type of the adapter series, and a second adapter is produced as a second adapter type of the adapter series,
wherein, to produce the first adapter, the first housing part (30) is directly connected to the second housing part (31), wherein the outer ring (90) of the first bearing is received in the first and in the second housing part (31) and centres the first housing part in relation to the second housing part (31),
**characterised in that**
to produce the second adapter, the first housing part (30) is directly connected to a or the intermediate flange (80), and the intermediate flange (80), on its side facing away from the first housing part (30), is directly connected to the second housing part (31), wherein the outer ring (90) of the first bearing is received in the first housing part (30) and in the intermediate flange (80) and centres the first housing part (30) in relation to the intermediate flange (80),
in particular wherein the outer ring (90) of the first bearing is axially delimited by a step of the first housing part (30) and an outer ring of a freewheel, and wherein the outer ring of the freewheel is engaged against a step of the intermediate flange (80) on the side of the outer ring of the freewheel facing away from the outer ring (90) of the first bearing.

## Revendications

1. Série d'adaptateurs pour motoréducteurs, qui présente un premier adaptateur et un second adaptateur, le premier adaptateur et le second adaptateur représentant des types d'adaptateurs, à savoir des variantes d'adaptateurs, de la série d'adaptateurs,
(i) le premier adaptateur comprenant un arbre d'adaptateur (1), un premier palier et un carter présentant des première et seconde parties de carter (30, 31),
la première partie de carter (30) étant reliée, en particulier reliée directement, à la seconde partie de carter (31), en particulier afin de former le carter,
la bague intérieure (3) du premier palier étant enfichée sur l'arbre d'adaptateur (1),
la bague extérieure (90) du premier palier étant accueillie dans les première et seconde parties de carter (30, 31) et centrant la première partie de carter (30) par rapport à la seconde partie de carter (31),
(ii) le second adaptateur présentant un second arbre d'adaptateur (1), un premier palier réalisé de manière identique au premier palier et un second carter,
**caractérisée en ce que**
le second carter présente une première partie de carter (30) réalisée de manière identique à la première partie de carter (30), une seconde partie de carter (31) réalisée de manière identique à la seconde partie de carter (31) et une bride intermédiaire (80), la première partie de carter (30) du second adaptateur étant reliée, en particulier étant reliée directement, à la bride intermédiaire (80), et la bride intermédiaire (80) étant reliée, en particulier étant reliée directement, à la seconde partie de carter (31) sur son côté qui est opposé à la première partie de carter (30), en particulier dans la direction axiale, c'est-à-dire dans la direction de l'axe de rotation du second arbre d'adaptateur (1), en particulier afin de former le carter,
la bague intérieure (3) du premier palier du second adaptateur étant enfichée sur l'arbre d'adaptateur (1),
la bague extérieure (90) du premier palier du second adaptateur étant accueillie dans la première partie de carter (30) et dans la bride intermédiaire (80) et centrant la première partie de carter (30) par rapport à la bride intermédiaire (80),
une bague d'étanchéité d'arbre (33), ou une roue libre, étant accueillie dans la bride intermédiaire (80).

2. Série d'adaptateurs selon la revendication 1,
**caractérisée en ce que**
la seconde partie de carter (31) présente des alésages traversants (100), en particulier donc des alésages qui traversent, en particulier des alésages qui traversent de manière radiale,
les alésages traversants (100) étant espacés les uns des autres, en particulier de manière uniforme, dans la direction circonférentielle,
les alésages traversants (100) étant en particulier tous agencés au niveau de la même position axiale,
l'alésage traversant (100) respectif étant en particulier respectivement fermé par un bouchon de fermeture en particulier respectif,
l'axe d'alésage de chaque alésage traversant (100) pouvant en particulier, dans une position angulaire respective de l'arbre d'adaptateur (1), être amené en alignement avec l'axe de vis d'une vis de serrage (102) d'une bague de serrage (103), pouvant être reliée de manière solidaire en rotation à l'arbre d'adaptateur (1), du premier ou du second adaptateur.

3. Série d'adaptateurs selon la revendication 1,
**caractérisée en ce que**
dans le premier adaptateur, la bague extérieure (90) du premier palier est accueillie d'une part dans un alésage de la première partie de carter (30) et d'autre part dans un alésage de la seconde partie de carter (31)
la somme des profondeurs de perçage des deux alésages étant égale à la longueur axiale de la bague extérieure (90),
dans le second adaptateur, la bague extérieure (90) du premier palier est accueillie d'une part dans un alésage de la première partie de carter (30) et d'autre part dans un alésage de la bride intermédiaire (80)
dans le second adaptateur, la somme des profondeurs de perçage des deux alésages étant égale à la longueur axiale de la bague extérieure (90) ou étant égale à la somme des longueurs axiales de la bague extérieure (90) du premier palier et de la bague extérieure de la roue libre.

4. Série d'adaptateurs selon l'une quelconque des revendications précédentes,
**caractérisée en ce que**
le premier adaptateur présente une pièce d'accouplement (7),
l'arbre d'adaptateur (1) présentant des griffes (5), en particulier des griffes (5) faisant saillie dans la direction axiale,
la bague intérieure (3) du premier palier étant enfichée sur un siège de palier fourni, en particulier finement usiné, au niveau de l'arbre d'adaptateur (1),
le siège de palier dans la direction axiale recouvrant une première région dans laquelle le siège de palier est formé de manière ininterrompue dans la direction circonférentielle et une seconde région dans laquelle le siège de palier est formé de manière interrompue en particulier plusieurs fois dans la direction circonférentielle.

5. Série d'adaptateurs selon la revendication 4,
**caractérisée en ce que**
une pièce d'amortissement (6) est agencée entre les autres griffes (8) de la pièce d'accouplement (7) et les griffes (5) de l'arbre d'adaptateur (1),
la pièce d'amortissement (6) présentant en particulier un corps de base et des régions à rayons saillantes dans la direction radiale et formées au niveau du dit corps de base, les régions à rayons étant agencées axialement entre respectivement une griffe de la pièce d'accouplement (7) et une griffe de la pièce d'adaptateur.

6. Série d'adaptateurs selon la revendication 4 ou 5,
**caractérisée en ce que**
un évidement (50) périphérique dans la direction circonférentielle, en particulier une découpe circulaire, est formé au niveau de l'arbre d'adaptateur (1) entre la première région et la seconde région dans la direction axiale.

7. Série d'adaptateurs selon la revendication 4, 6 ou 5,
**caractérisée en ce que**
la région recouverte par les griffes (5) dans la direction axiale comprend la première région et est espacée de la seconde région dans la direction axiale,
et/ou **en ce que**
la direction axiale est parallèle à l'axe de rotation de l'arbre d'adaptateur (1),
la direction circonférentielle et/ou la distance radiale se rapportant en particulier au dit axe de rotation.

8. Série d'adaptateurs selon l'une quelconque des revendications précédentes,
**caractérisée en ce que**
la bague intérieure (3) est limitée axialement des deux côtés par des bagues de blocage (2, 4),
et/ou **en ce que**
une première bague de blocage (2) est accueillie dans une première rainure annulaire, en particulier dans une première rainure annulaire périphérique, complète et/ou ininterrompue dans la direction circonférentielle, de l'arbre d'adaptateur (1) et délimite la bague intérieure (3),
la première rainure annulaire étant espacée par rapport à la première région et/ou par rapport aux griffes (5) dans la direction axiale,
et/ou **en ce que**
une seconde bague de blocage (4) délimite la bague intérieure (3), en particulier sur le côté de la bague intérieure qui est opposé à la première bague de blocage (2) dans la direction axiale,
la seconde bague de blocage (4) étant accueillie dans une seconde rainure annulaire.

9. Série d'adaptateurs selon la revendication 8,
**caractérisée en ce que**
la seconde rainure annulaire est réalisée de manière en particulier plusieurs fois interrompue dans la direction circonférentielle, et/ou la seconde rainure annulaire étant agencée dans la seconde région.

10. Série d'adaptateurs selon la revendication 8 ou 9 et 5 à 7
**caractérisée en ce que**
la seconde rainure annulaire est insérée dans les griffes (5) de la pièce d'adaptateur et/ou dans les autres griffes (8) de la pièce d'accouplement (7).

11. Série d'adaptateurs selon la revendication 8, 10 ou 9 et 4 à 7
**caractérisé en ce que**
la seconde rainure annulaire est réalisée de manière ininterrompue dans la direction circonférentielle et est insérée dans la pièce d'accouplement (7).

12. Série d'adaptateurs selon l'une quelconque des revendications 4 à 7 ou 10 à 11,
**caractérisée en ce que**
le premier palier est réalisé sous la forme d'un palier fixe,
et/ou **en ce que**
l'adaptateur présente un second palier, en particulier un palier réalisé sous forme de palier libre (32),
dont la bague extérieure (90) est accueillie dans la première partie de carter (30) et dont la bague intérieure (3) est enfichée sur l'arbre d'adaptateur (1),
une bague d'étanchéité d'arbre (33), qui assure l'étanchéité vers l'arbre d'adaptateur (1), en particulier dont la lèvre d'étanchéité s'étend sur l'arbre d'adaptateur (1), étant accueillie dans la première partie de carter (30), en particulier sur le côté du second palier qui est opposé à la pièce d'accouplement (7).

13. Procédé de fabrication d'adaptateurs d'une série d'adaptateurs, présentant des types d'adaptateurs, selon l'une quelconque des revendications précédentes à partir d'un système modulaire comprenant
- une première partie de carter (30),
- une seconde partie de carter (31),
- une bride intermédiaire (80) et
- un premier palier,
un premier adaptateur étant fabriqué sous la forme d'un premier type d'adaptateur de la série d'adaptateurs et un second adaptateur étant fabriqué sous la forme d'un second type d'adaptateur de la série d'adaptateurs,
la première partie de carter (30) étant reliée directement à la seconde partie de carter (31) en vue de la fabrication du premier adaptateur, la bague extérieure (90) du premier palier étant accueillie dans les première et seconde parties de carter (31) et centrant la première partie de carter par rapport à la seconde partie de carter (31),
**caractérisé en ce que**
pour la fabrication du second adaptateur, la première partie de carter (30) est reliée directement à une, ou à la, bride intermédiaire (80) et la bride intermédiaire (80) est reliée directement à la seconde partie de carter (31) sur son côté qui est opposé à la première partie de carter (30), la bague extérieure (90) du premier palier étant accueillie dans la première partie de carter (30) et dans la bride intermédiaire (80) et la première partie de carter (30) étant centrée par rapport à la bride intermédiaire (80), la bague extérieure (90) du premier palier étant en particulier limitée axialement par un étage de la première partie de carter (30) et une bague extérieure d'une roue libre, la bague extérieure de la roue libre étant appliquée contre un étage de la bride intermédiaire (80) sur le côté de la bague extérieure de la roue libre qui est opposé à la bague extérieure (90) du premier palier.
